# EUROPEAN PATENT APPLICATION

(11) **EP 2 892 143 A1**
(43) Date of publication of application: **08.07.2015**
(21) Application number: 14150361.5
(22) Date of filing: 07.01.2014
(51) Int. Cl.: H02M 7/48, E06B 9/68

(54) **AC power supply**

(71) Applicant: Siemens Schweiz AG, 8047 Zürich (CH)
(72) Inventor: Beckers, Paul, 52399 Merzenich (DE)
(74) Representative: Maier, Daniel Oliver

(57) **Abstract**

AC power supply. A power supply for the auxiliaries of a room unit, the power supply comprising a source of direct current and of direct voltage (1), a microcontroller (7),
a sine inverter (2) configured to produce alternating current and alternating voltage, the source of direct current (1) electrically connects to the sine inverter (2), said electrical connection (3a, 3b) between the source of direct current and of direct voltage and the sine inverter (2) supplies direct current and direct voltage to the sine inverter (2), the microcontroller (7) is configured to communicate with the at least sine inverter (2), such that the microcontroller (7) sets the frequency of the alternating current at the output (4) of the sine inverter (2), said microcontroller (7) serves a plurality of purposes and is configured to communicate also with components of a room unit other than a source of direct current and of direct voltage 1 and other than a sine inverter (2).

## Description

### Background

The present disclosure relates to an AC power supply for the auxiliaries of a room unit. More specifically, the present disclosure relates to a 24 Vᵣₘₛ AC supply to be arranged together with other components on the printed circuit board of a room unit.

Room units as described in this disclosure are part of a room automation system. These room units may be arranged stand-alone or otherwise as a plurality of communicating units. State-of-the-art room units provide controllers to manage a wide range of disciplines such as heating, ventilation, air conditioning, fan coils, lighting, and blinds.

Especially throughout Europe, room units are commonly powered through a 230 Vᵣₘₛ AC, 50 Hz, mains supply. In contrast to the supply voltage of the room unit, auxiliaries such as valves and blinds typically require a 24 Vᵣₘₛ AC supply. To minimize effort and cost and to simplify installation, it is common for a room unit to provide a 24 Vᵣₘₛ AC supply. The supply is then used by all the valves and the blinds connected to the room unit.

The requirements of 24 Vᵣₘₛ AC is technically challenging, since most room units come with a switched-mode power supply. A switched-mode power supply provides DC voltage and current at its output. A switched-mode power supply is thus not a good choice for valves and blinds, since the latter two rely on AC power.

The problem may be tackled by using a mains transformer built into the room unit. A 230 Vᵣₘₛ to 24 Vᵣₘₛ mains transformer can actually be procured off-the-shelf and can be connected in parallel to the switched-mode power supply. This resolution does, however, have several shortcomings.

A 230 Vᵣₘₛ to 24 Vᵣₘₛ mains transformer has got an iron core and a transformer winding. Compared to other components on the printed circuit board of the room unit, the weight of the mains transformer will be large. Also, the iron core and the windings will cover a large area on the printed circuit board.

The output voltage of a mains transformer naturally depends on its input voltage. In the absence of a tap changer, the ratio between output voltage and input voltage will be constant. That is, variations of the 230 Vᵣₘₛ AC input at the primary winding of the mains transformer will yield decreases or increases of the secondary 24 Vᵣₘₛ AC voltage. Unfortunately, the voltage of the power grid is allowed to vary in a wider range compared to its frequency. At the same time, variations of the secondary 24 Vᵣₘₛ AC voltage are often not acceptable for appliances whose electronic components rely on constant voltage.

Due to no-load (magnetization) losses, a mains transformer with an iron core will exhibit power losses even when no load is connected to its secondary winding. In addition, the mains transformer will have load-losses due to the resistivity of its winding and due to eddy currents. Manufacturers are interested in avoiding these losses, especially since energy rating is a key element of the technical specification of today's appliances.

Manufacturers of room units are interested in saving materials to provide room units with the lowest possible environmental footprint and also to reduce cost. Mains transformers require (grain-oriented) steel for their cores, copper wires for their windings, and electric insulation for the windings and in between the core laminations. Also, the enclosure of the mains transformer may have to be cast in resin for cooling and insulation purposes. There is thus a need to come up with a room unit whose design yields a reduced consumption of materials during production.

The aforementioned losses of a mains transformer will eventually have to be dissipated in the form of heat. The heat dissipated by the mains transformer will generally yield increased temperatures on the printed circuit board. The mains transformer will typically be installed on a printed circuit board together with other electronic components. Any temperature rise caused by a mains transformer may be an issue especially for micro-controllers which operate in a limited temperature range. A temperature rise will also limit the life of any electrolyte capacitors on the printed circuit board.

The aim of the present disclosure is to at least mitigate the aforementioned difficulties and to provide power supplies for room units that meet the aforementioned requirements.

### Summary

It is an object of the present disclosure to provide a power supply for the auxiliaries of a room unit with minimum weight.

It is a related object of the present disclosure to come up with a power supply for the auxiliaries of a room unit that integrates well on a printed circuit board with other electric or electronic components.

The above problems are resolved by a power supply for the auxiliaries of a room unit according to the main claim of this disclosure. Preferred embodiments of the present disclosure are covered by the dependent claims.

It is yet another object of the present disclosure to provide a power supply for the auxiliaries of a room unit whose output voltage is alternating (AC).

It is yet another object of the present disclosure to provide a power supply for the auxiliaries of a room unit whose output voltage does not vary depending on the mains voltage.

It is a related object of the present disclosure to provide a power supply for the auxiliaries of a room unit, so the room unit can be connected both to 230 Vᵣₘₛ AC, 50 Hz, and to 110 Vᵣₘₛ AC, 60 Hz, mains supplies.

It is a related object of the present disclosure to provide an AC power supply for the auxiliaries of a room unit whose AC output frequency can be adjusted and is independent of the frequency of the mains supply.

It is a related object of the present disclosure to provide an AC power supply for the auxiliaries of a room unit that makes best use of existing components of a room unit.

It is another object of the present disclosure to provide a power supply for the auxiliaries of a room unit has minimum electric losses.

It is a related object of the present disclosure to come up with a power supply for the auxiliaries of a room unit with maximum efficiency.

It is a related object of the present disclosure to come up with a power supply for the auxiliaries of a room unit with minimum heat dissipation, so no other components of the room unit are adversely affected by the power supply.

It is yet another object of the present disclosure to provide a power supply for the auxiliaries of a room unit with minimum size.

It is yet another object of the present disclosure to provide a room unit that is cost-effective and reliable.

### Brief description of the drawings

Various features will become apparent to those skilled in the art from the following detailed description of the disclosed non-limiting embodiments. The drawings that accompany the detailed description can be briefly described as follows:
FIG 1 is a schematic depicting the principal power supply components of a room unit. FIG 1 also shows how these components are interconnected.
FIG 2 illustrates some of the principal components of the 24 Vᵣₘₛ AC sine inverter for the auxiliaries of the room unit.

### Detailed description

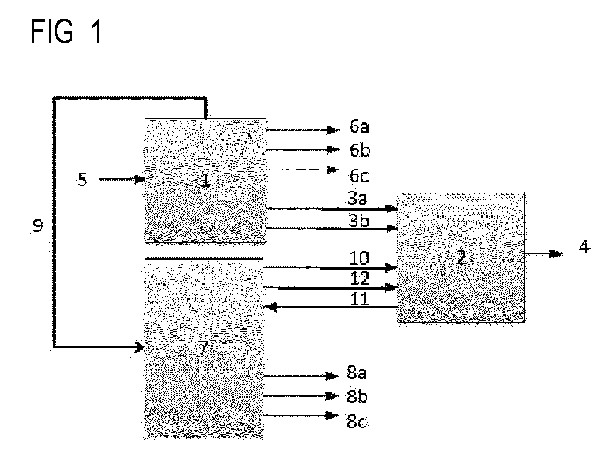

FIG 1 depicts a switched-mode power supply 1 of a room unit feeding a sine inverter 2. Two leads 3a, 3b, supply positive 3a and negative 3b DC voltage to the sine inverter. In order for the sine inverter to generate 24 Vᵣₘₛ AC (to ground) at its output 4, the two leads 3a, 3b preferably supply DC voltages of +38 V on lead 3a and of -38 V on lead 3b. This value corresponds to the output voltage of the sine inverter 2 of 24 Vᵣₘₛ AC multiplied with 1.414 (the square root of 2). An input voltage of +38 V on lead 3a and of -38 V on lead 3b ensures the peaks of the 24 Vᵣₘₛ AC output voltage are covered. The sine inverter 2 also produces electric currents at its output 4 that are suitable to drive valves and blinds connected to the room unit.

The switched-mode power supply 1 is fed through an input 5. The input 5 of the switched-mode power supply typically supplies AC voltages to ground ranging from 110 Vᵣₘₛ AC to 240 Vᵣₘₛ AC.

The switched-mode power supply 1 of the room unit also provides a set of output leads 6a, 6b, 6c. These leads 6a, 6b, 6c supply other electric and electronic components inside the room unit with (DC) voltage and current.

The room unit also comprises a microcontroller 7. In a preferred embodiment, the microcontroller 7 also comprises a capture-compare unit. A capture-compare unit is designed for the special purpose of generating a pulse-width modulated signal. The presence of a capture-compare unit for generation of a pulse-width modulated signal reduces the load of other components of the microprocessor 7. Further, the microcontroller 7 preferably comprises a separate interrupt connector 11 for the detection of overcurrents and/or short-circuits.

Practically all contemporary room units comprise at least one microcontroller 7. The microcontroller 7 of the room unit typically receives and processes input signals from an operator or from various (temperature and humidity) sensors. The microcontroller 7 also displays output on a panel and sends control signals to other components of the room unit. A plurality of input/output connectors 8a, 8b, 8c is provided for the above purposes.

The switched-mode power supply 1 also supplies power to the microcontroller 7 through a lead or a set of leads 9.

A pulse-width modulated signal is preferably generated by the capture-compare unit of the microcontroller 7. The frequency of the pulse-width modulated signal is typically significantly higher than the frequency at the output 4 of the sine inverter 2. In a particular embodiment, the frequency of the pulse-width modulated signal would be close to 100 kHz.

The pulse-width modulated signal as generated by the microcontroller 7 typically has a voltage level of 3.3 V. The sine inverter 2 provides a power amplifier to form a rectangular signal with voltages of +Uₛ and -Uₛ on the basis of the pulse-width modulated signal coming from the microcontroller 7. To generate a 24 Vᵣₘₛ alternating voltage, Uₛ has to be equal to or larger than 38 V. In a preferred embodiment, the power amplifier can be switched off through a disable signal.

A (LC) low-pass filter 15 is arranged at and connected to the output of the power amplifier. To effectively filter out the frequency of the pulse-width modulated signal, the cut-off frequency of the LC filter 15 has to be in between the frequencies of the pulse-width-modulated signal and of the signal at the output 4. By way of example, the cut-off frequency of the LC filter could be 1 kHz. Further, a first-order LC filter is typically employed. Higher-order filters may used when the frequencies of the pulse-width modulated signal and of the signal at the output 4 are close.

Trough adjustment of the duty cycle of the pulse-width modulated signal, the voltage at the output 4 can be varied between 0% and 100%. Given a resolution of the pulse-width modulated signal of 10 bits, 1024 voltage levels between +Uₛ and -Uₛ can be attained.

The microcontroller 7 then modulates the duty cycle of the pulse-width modulated signal in accordance with the requirements for the voltage at the output 4. That way, a sinusoidal (AC) output voltage can be generated at the output 4.

For the purpose of generating pulse-width modulated signals, the microcontroller comprises a (complementary metal oxide semiconductor) CMOS clock or similar. The pulse-width modulated signal is then formed based on the internal clock of the microcontroller 7. A quartz crystal may be connected to the microcontroller 7 to come up with a reference frequency for the microcontroller 7. The use of a quartz crystal to form a reference frequency yields a pulse-width modulated signal with excellent long-term stability.

The microcontroller 7 serves a plurality of purposes. The microcontroller 7 communicates with the sine inverter 2. The microcontroller 7 also communicates with components of a room unit other than the switched-mode power supply 1 and other than the sine inverter 2.

The sine inverter 2 also sends an overcurrent signal to the microcontroller 7 through a connector 11. The connector 11 may typically be an interrupt connector of the microcontroller 7. A short-circuit inside one of the blinds or inside one of the valves connected to the room unit may cause such an overcurrent. The sine inverter 2 then sends an overcurrent signal to the microcontroller 7. An overcurrent signal would typically be a bit, so the voltage level of the connector 11 is either 0 V DC or 3.3 V or 5 V DC. In a preferred embodiment, the overcurrent signal is sent to the microcontroller 7 through an interrupt connector. Reception of an overcurrent signal through an interrupt connector allows the microcontroller 7 to react quickly, typically within milliseconds.

The microcontroller 7 then internally processes the overcurrent signal. The microcontroller 7 decides on whether to disable the sine inverter 2. If a decision is made to disconnect the sine inverter 2, another bit will be sent through the enable/disable connector 12. This signal is once again typically a bit with a value either of 0 V, of 3.3 V, or of 5 V DC. Once the sine inverter 2 receives a disable signal, it will switch off its output 4. Consequently, any overcurrent will be removed from its 2 output 4. In another embodiment, the microcontroller 7 is configured to switch off the output 4 for other reasons such as saving energy and/or life extension of auxiliaries.

Processing of an overcurrent signal through a microcontroller 7 typically allows the system to respond faster compared to solutions based on fusible cut-outs or on positive thermal coefficient resistors. Further, a time limit may be programmed into the microcontroller 7 after which a disable signal is sent to the sine inverter 2. By way of example, that time limit could be 100 microseconds. In yet another embodiment, the microcontroller 7 first disables the sine inverter 2 and then after a delay time of several milliseconds turns the sine inverter 2 back on. This sequence of break and make operations helps avoid overheating of short-circuited auxiliaries. In a particular embodiment, the microcontroller 7 gradually increases the voltage supplied to an auxiliary device to reduce stress on the auxiliary device.

Practical guidance on how to design sine inverters is also given in Jim Doucet, Dan Eggleston, Jeremy ShawStephen J. Bitar, DC/AC Pure Sine Wave Inverter, Worcester Polytechnic Institute, MQP Terms ABC 2006 - 2007. The same document is hereby included by reference.

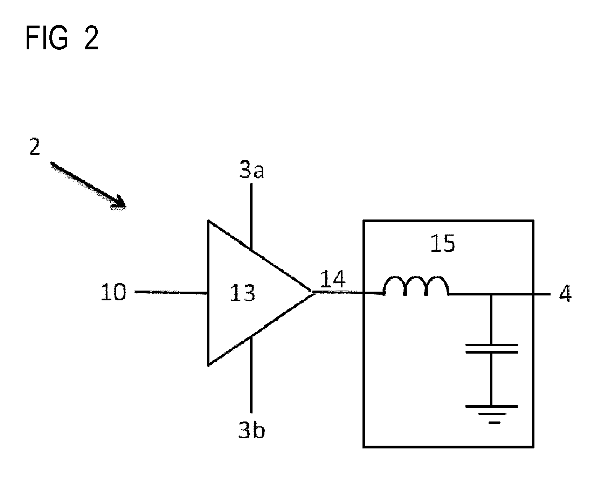

Now turning to FIG 2, some of the fundamentals of the sine inverter 2 will be detailed. FIG 2 shows a sine inverter 2 according to an embodiment of this disclosure. The first stage of the sine inverter 2 is an amplifier 13. The amplifier 13 is fed by the two voltage signals 3a, 3b coming from the switched-mode power supply 1. The amplifier 13 also receives a pulse-width modulated signal through connector 10 from the microcontroller 7. The amplifier 13 basically amplifies this signal, so its output 14 will be a rectangular signal with increased voltage and/or with increased current.

The sine inverter 2 also comprises enable/disable input connectors 12 and overcurrent output connectors 11. These connectors 11, 12 have been detailed under FIG 1 and the same detail need not be repeated under FIG 2.

It should be understood that the foregoing relates only to certain embodiments of the invention and that numerous changes may be made therein without departing from the spirit and the scope of the invention as defined by the following claims. It should also be understood that the invention is not restricted to the illustrated embodiments and that various modifications can be made within the scope of the following claims.

### Reference numerals

- 1: switched-mode power supply
- 2: sine inverter
- 3a, 3b: DC supply leads
- 4: AC output of the sine inverter 2
- 5: mains connection of the switched-mode power supply
- 6a, 6b, 6c: supply leads to various components of the room unit
- 7: microcontroller
- 8a, 8b, 8c: connectors to various components of the room unit
- 9: supply leads or set of supply leads to the microcontroller 7
- 10: connector for a pulse-width modulated signal
- 11: connector for an overcurrent signal
- 12: connector for an enable/disable signal
- 13: amplifier of the sine inverter 2
- 14: output of the amplifier 13
- 15: (LC) low-pass filter

## Claims

1. A power supply for the auxiliaries of a room unit, the power supply comprising
a source of direct current and of direct voltage (1),
a microcontroller (7),
an at least a sine inverter (2) configured to produce alternating current and alternating voltage,
the source of direct current (1) electrically connects to the at least a sine inverter (2),
said electrical connection (3a, 3b) between the source of direct current and of direct voltage and the at least a sine inverter (2) supplies direct current and direct voltage to the at least a sine inverter (2),
the microcontroller (7) is configured to communicate with the at least sine inverter (2), such that the microcontroller (7) sets the frequency of the alternating current at the output (4) of the at least a sine inverter (2),
**characterised in that**
said microcontroller (7) serves a plurality of purposes and is configured to communicate also with components of a room unit other than a source of direct current and of direct voltage 1 and other than a at least a sine inverter (2).

2. A power supply for the auxiliaries of a room unit according to claim 1, wherein
the source of direct current and of direct voltage (1) is a switched-mode power supply.

3. A power supply for the auxiliaries of a room unit according to claim 1, wherein
the source of direct current and of direct voltage (1) is configured to electrically connect to a mains supply.

4. A power supply for the auxiliaries of a room unit according to claim 1, wherein
the at least a sine inverter (2) is configured to supply power to auxiliaries of a room unit such as valves and blinds.

5. A power supply for the auxiliaries of a room unit according to claim 1, wherein
the microcontroller (7) is configured to send a sine-modelling pulse-width modulated signal or a pulse-width modulated signal to the at least a sine inverter (2), such that the microcontroller (7) sets the frequency of the alternating current at the output (4) of the at least a sine inverter (2).

6. A power supply for the auxiliaries of a room unit according to claim 1, wherein
the at least a sine inverter (2) is configured to send an overcurrent signal to the microcontroller (7).

7. A power supply for the auxiliaries of a room unit according to claim 1, wherein
the microcontroller (7) is configured to send an enable and/or disable signal to the at least a sine inverter (2).

8. A power supply for the auxiliaries of a room unit according to claim 1, wherein
the power supply comprises an electric connection (10) configured to facilitate communication between the microcontroller (7) and the at least a sine inverter (2).

9. A power supply for the auxiliaries of a room unit according to claim 6, wherein
the power supply comprises an electric connection (11) configured to send an overcurrent signal from the at least a sine inverter (2) to the microcontroller (7).

10. A power supply for the auxiliaries of a room unit according to claim 7, wherein
the power supply comprises an electric connection (12) configured to send an enable and/or disable signal from the microcontroller (7) to the at least a sine inverter (2).

11. A power supply for the auxiliaries of a room unit according to claim 8, 9, or 10 wherein
at least one of the electric connections (10, 11, 12) is a galvanic connection.

12. A power supply for the auxiliaries of a room unit according to claims 6 and 7, wherein
the microcontroller (7) is configured to turn off the at least a sine inverter (2) by sending a disable signal to the at least a sine inverter (2) after an overcurrent signal has been received by the microcontroller (7).

13. A power supply for the auxiliaries of a room unit according to claim 1, wherein
the microcontroller (7) provides at least a connector (8a, 8b, 8c) configured to communicate with components of a room unit other than a source of direct current and of direct voltage (1) and other than a at least a sine inverter (2).

14. A power supply for the auxiliaries of a room unit according to claim 1, wherein
the power supply comprises an electric lead or a plurality of electric leads (9) connecting the source of direct current and of direct voltage (1) to the microcontroller (7).

15. A room unit with a power supply according to one of the previous claims.
